# EUROPÄISCHE PATENTSCHRIFT

(11) **EP 1 133 622 B1**
(45) Veröffentlichungstag und Bekanntmachung des Hinweises auf die Patenterteilung: **11.08.2004**
(21) Anmeldenummer: 99968787.4
(22) Anmeldetag: 11.11.1999
(51) Int. Cl.: F01N 3/08, B01D 53/94

(54) **VERFAHREN ZUM VERRINGERN SCHÄDLICHER ABGASBESTANDTEILE IN EINEM ABGASREINIGUNGSSYSTEM EINER BRENNKRAFTMASCHINE**
METHOD FOR REDUCING HARMFUL EXHAUST ELEMENTS IN AN EXHAUST EMISSION CONTROL SYSTEM IN AN INTERNAL COMBUSTION ENGINE
PROCEDE POUR REDUIRE LA PROPORTION DE CONSTITUANTS NOCIFS DE GAZ D'ECHAPPEMENT DANS UN SYSTEME DE PURIFICATION DE GAZ D'ECHAPPEMENT D'UN MOTEUR A COMBUSTION INTERNE

(30) Priorität: 28.11.1998 DE 19855090
(43) Veröffentlichungstag der Anmeldung: 19.09.2001
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Meyer, Enno, Dr.
(86) Internationale Anmeldenummer: PCT/EP1999/008671
(87) Internationale Veröffentlichungsnummer: WO 2000/032300

(56) Entgegenhaltungen:
- EP-A- 0 625 633
- EP-A- 0 761 286
- EP-A- 0 814 242
- EP-A- 0 878 610
- JP-A- 5 076 771

## Beschreibung

Die Erfindung bezieht sich auf ein Verfahren zum Verringern schädlicher Abgasbestandteile im Abgasreinigungssystem einer Brennkraftmaschine, wobei das Abgasreinigungssystem eine NOx-Speicherkatalysatoranordnung aufweist, die eine Kombination aus NOx-Speicherkatalysator sowie Schwefelfalle beinhaltet.

Ein Verfahren und eine Vorrichtung zur Abgasreinigung mit einem NOx-Speicherkatalysator ist z. B. in der DE-43 34 763 A1 beschrieben. Aus der EP 0 625 633 A1 ist ein Abgasreinigungssystem mit einem NOx-Speicherkatalysator mit einer vorgeschalteten Schwefelfalle in Form eines SOx-Speicherkatalysators zu entnehmen.

Aus der EP-A-0 625 633 ist ein Abgasreinigungsystem bestehend aus einem NOx-Speicherkatalysator mit vorgeschalteter Schwefelfalle bekannt, dessen NOx-Speicherkatalysator bei normaler Betriebstemperatur mittels NOx-Desorption regeneriert wird. Nach jeweils n De-Nitrierungen erfolgt eine Regeneration der Schwefelfalle mittels SOx-Desorption bei einer Desulfatierungstemperatur, die höher als die Betriebstemperatur der Denitrierung ist.

JP-A-5 0767 71 beschreibt einen Katalysator zur Umformung von NOx, der für Magermotoren einsetzbar ist und der einen NOx-Umformungskatalysator, bei dem mindestens Kupfer durch Ionenaustausch auf Zeolith aufgetragen ist, und einen vorgelagerten SOx-Absorber umfaßt.

EP-A-0 814 242 beschreibt ein Abgasreinigungssystem einer Brennkraftmaschine, das eine Schwefelfalle mit nachgeschaltetem NOx-Speicherkatalysator umfasst, wobei die Schwefelfalle magnesiumhaltig sein kann.

Im Funktionsbetrieb des Abgasreinigungssystems gelangt mit der Abgasströmung Schwefel zur NOx-Speicherkatalysatoranordnung, der sich im verwendeten Kraftstoff befand und den Katalysator der NOx-Speicherkatalysatoranordnung beeinträchtigt. Man spricht dabei von einer Vergiftung des Katalysators durch den Schwefel. Die dabei gebildeten Sulfate können bei erhöhten Abgastemperaturen wieder umgewandelt werden, so daß die Vergiftung insgesamt reversibel ist. Diese bekannte Verfahrensweise führt jedoch zu einem erhöhten Energieverbrauch, da zur Entschwefelung des NOx-Speicherkatalysators eine höhere Temperatur als zur reinen Regenerierung notwendig ist.

Der Erfindung liegt die Aufgabe zugrunde, ein Verfahren und eine Vorrichtung zu schaffen, womit die Abgasreinigung mit geringerem Energieaufwand erfolgen kann.

Diese Aufgabe wird durch die Merkmale des Anspruchs 1 gelöst. Bevorzugte Ausgestaltungen der Erfindung sind Gegenstand der Unteransprüche.

Der Erfindung liegt die Erkenntnis zugrunde, daß für eine wirksame De-Sulfatierung ein die optimale De-Sulfatierungstemperatur enthaltender Temperaturbereich zur Verfügung steht und deshalb auch unterhalb der optimalen De-Sulfatierungstemperatur im unteren Abschnitt dieses Temperaturbereichs eine De-Sulfatierung möglich ist. Im unteren Abschnitt dieses Temperaturbereichs ist die Wirksamkeit der De-Sulfatierung wegen der geringeren Temperatur zwar vermindert, jedoch ist diese Verminderung gering oder vemachlässigbar gering, weil die untere Grenze dieses Temperaturbereichs bezüglich der optimalen De-Sulfatierungstemperatur so bemessen ist, daß die Wirksamkeit der De-Sulfatierung im unteren Abschnitt dieses Temperaturbereichs nur geringfügig vermindert ist oder vernachlässigbar geringer ist. Da beim erfindungsgemäßen Verfahren die De-Sulfatierung jeweils nach einem Zeitintervall abwechselnd bei einer niedrigeren und einer höheren Temperatur im De-Sulfatierungs-Temperaturbereich erfolgt oder nach n De-Sulfatierungen, wobei n eine natürliche Zahl ist, bei niedrigerer Temperatur eine De-Sulfatierung bei höherer Temperatur jeweils im De-Sulfatierungs-Temperaturbereich erfolgt, wird der Energiebedarf zum Aufheizen der NOx-Speicherkatalysatoranordnung gesenkt. Dabei zeigt es sich beim erfindungsgemäßen Verfahren, daß eine vorteilhafte gestufte De-Sulfatierung stattfindet, die eine gute Funktion und eine lange Lebensdauer der Speicherfähigkeit bzw. -kapazität der NOx-Speicherkatalysatoranordnung gewährleistet.

Im Rahmen der Erfindung kann das Verfahren bei NOx-Speicherkatalysatoranordnungen bestehend aus einem NOx-Speicherkatalysator sowie einer Schwefelfalle erfolgen. Dabei kann es sich um eine separate Schwefelfalle handeln, die dem NOx-Speicherkatalysator vorgeschaltet ist. Es sind auch Anordnungen denkbar, bei denen auf einem einzigen Träger nacheinandergeschaltet die SOx-Speicher und NOx-Speicher aufgebracht sind. Femer sind Anordnungen möglich, bei denen das NOx-Speichermaterial zuerst auf dem Träger aufgebracht ist und anschließend eine überlagernde Schwefelspeicherkomponente auf gebracht wird. Es ist auch möglich, die Schwefelfänger- und die NOx-Speicherkomponenten oder -materialien zu mischen und diese dann gemeinsam auf den Träger aufzubringen. Vorzugsweise neigt die Speichersubstanz zur Speicherung des SOx zur Sulfatausbildung und weniger zur Nitratausbildung, wobei die SOx-Speichersubstanz eine Entschwefelung bei niedrigeren Temperaturen wie übliche NOx-Speichermaterialien ermöglicht.

Die Funktion des erfindungsgemäßen Verfahrens wird nachfolgend anhand einer Zeichnung näher erläutert.

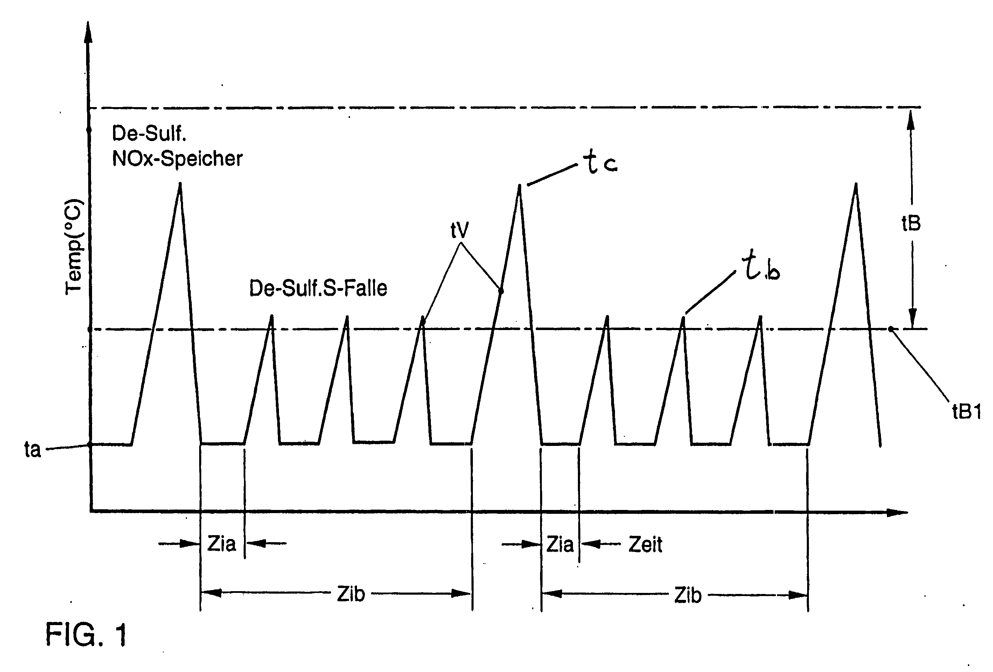

- Fig. 1: zeigt eine schematische Darstellung des erfindungsgemäßen Verfahrens.

Fig. 1 zeigt den Temperaturverlauf als Funktion der Zeit des erfindungsgemäßen Verfahrens. Dargestellt ist ein Temperaturbereich tB, in dem das Aufheizen des NOx-Speicherkatalysators und der wenigstens einen Schwefelfalle durch eine geeignete Aufheizvorrichtung oder durch eine geeignete Aufheizmaßnahme während des Regenerationsbetriebs erfolgt. Der Speicherkatalysator ist vorzugsweise ein Dreiwege-Katalysator mit einer zusätzlichen NOx-Speicherkomponente.

Einer den Speicherkatalysator aufweisenden Brennkraftmaschine ist eine elektronische Steuer- oder Regelvorrichtung zugeordnet, die nach vorhandenen und vom Fahrer einstellbaren Funktionsparametem wie Motortemperatur, Geschwindigkeit, Beschleunigung und der jeweiligen Absorptionsfunktion des Speicherkatalysators ein Kraftstoff/Luft-Gemisch bereitstellt, beim vorliegenden Ausführungsbeispiel die vorhandene Einspritzvorrichtung entsprechend regelt.

Der sich beim Aufheizen ergebende Temperaturverlauf tV ist als zickzack-förmiger Kurvenverlauf erkennbar. Ausgehend von einer normalen Betriebstemperatur ta des NOx-Speicherkatalysators und der Schwefelfalle zeigt der Temperaturverlauf tV das Aufheizen nach Zeitintervallen Zia, Zib zu unterschiedlich hohen De-Sulfatierungstemperaturen tb, tc, die im De-Sulfatierungs-Temperaturbereich tB liegen. Die untere De-Sulfatierungstemperatur tb liegt etwas oberhalb der unteren Grenze tB1 des De-Sulfatierungs-Temperaturbereichs tB. Die obere De-Sulfatierungstemperatur tc kann im mittleren oder oberen Bereich des Temperaturbereichs tB liegen, wobei es sich vorzugsweise um die optimale De-Sulfatierungstemperatur handelt. Die Zeichnung läßt erkennen, daß nach mehreren Zeitintervallen Zia mit Aufheizungen auf die untere De-Sulfatierungstemperatur tb, d. h., nach einem Zeitintervall Zib, ein Aufheizen auf die höhere De-Sulfatierungstemperatur erfolgt.

Mit einer vorgeschalteten Schwefelfalle kann das motorseitig erzeugte SO₂ weitgehend, insbesondere zu mindestens etwa 50%, vorzugsweise bis zu etwa 80 %, vom NOx-Speicherkatalysator ferngehalten werden, so daß die Schwefelvergiftungsgeschwindigkeit entsprechend verlangsamt wird.

Die Schwefelfallen weisen eine Speichersubstanz auf, die vorzugsweise zur schnellen Sulfat- und weniger ausgebildet zur schnellen Nitratbildung neigt, und die bereits bei wesentlich niedrigeren Temperaturen wie übliche NOx-Speicherkatalysatoren eine Entschwefelung ermöglicht. Magnesiumhaltige Schwefelfallen mit sehr schneller Sulfatbildung können bereits bei < 550 °C entschwefelt werden, so daß der zur Entschwefelung erforderliche Mehrverbrauch geringer ist als bei höheren Temperaturen und eine noch größere Energieeinsparung gegenüber konventionellen NOx-Speicherkatalysatoren erreicht wird.

Beim erfindungsgemäßen Verfahren erfolgt somit nach n Entschwefeiungsvorgängen mit zugehörigen Zeitintervallen Zia bei der niedrigeren Entschwefelungstemperatur tb des NOx-Speicherkatalysators und der Schwefelfalle ein Entschwefelungsvorgang bei der höheren Entschwefelungstemperatur tc des NOx-Speicherkatalysators und der Schwefelfalle. Wie bereits erwähnt, ist hierdurch bei Gewährleistung zeitverkürzter Entschwefelungsvorgänge bei niedrigerer Temperatur tb ein geringerer Verbrauch gewährleistet. Dabei geht die Erfindung von der Erkenntnis aus, daß einerseits der Rückhaltegrad des NOx-Speicherkatalysators und der wenigstens einen Schwefelfalle nicht 100 % beträgt und andererseits der NOx-Speicherkatalysator beim Vorhandensein einer Schwefelfalle nur sehr langsam schwefelvergiftet wird.

Die De-Sulfatierungsvorgänge bei der niedrigeren und/oder höheren De-Sulfatierungstemperatur tb, tc können bei reduzierender, stöchiometrischer oder leicht magerer Zusammensetzung des Abgases erfolgen.

In solchen Fällen, in denen die Schwefelfalle ein Material niedrigerer De-Sutfatierungstemperatur tb und der NOx-Speicherkatalysator ein Material höherer De-Sulfatierungstemperatur tc aufweist, erfolgt nach n Entschwefelungsvorgängen bei der niedrigeren Entschwefelungstemperatur tb der Schwefelfalle einschließlich der zugehörigen Zeitintervalle Zia ein De-Sulfatierungsvorgang bei der höheren De-Sulfatierungstemperatur tc des NOx-Speicherkatalysators.

Es sind verschieden Ausführungsformen der NOx-Speicherkatalysatoranordnung, die die Funktionen der NOx-Speicherung sowie der SOx-Speicherung erfüllen, möglich, wobei das SOx-Speichermaterial bei einer niedrigeren Temperatur entschwefelt als das NOx-Speichermaterial.

So kann die Anordnung aus einer Schwefelfalle und einem NOx-Speicher bestehen, wobei die Schwefelfalle dem NOx-Speicher vorgelagert ist. Während der Regenerationsphase der Anordnung wird bei der niedrigeren Temperatur der SOx-Speicher entschwefelt, während der NOx-Speicher regeneriert wird. Bei der hohen Temperatur wird dann sowohl der SOx-Speicher als auch der NOx-Speicher entschwefelt und regeneriert. Femer können der SOx-Speicher und der NOx-Speicher hintereinander auf einem gemeinsamen Träger aufgebracht sein. In einer weiteren Ausführungsform wird auf einem Träger zuerst der NOx-Speicher als erste Schicht aufgebracht, der anschließend eine SOx-Speicherschicht überlagert wird. Ferner ist es möglich, die Materialien zur SOx-Speicherung und die zur NOx-Speicherung zu mischen und die Mischung auf einem gemeinsamen Träger aufzubringen. Die NOx-Regenartion und die Entschwefelung erfolgt bei allen Ausführungsformen nach dem erfindungsgemäßen Prinzip, indem die Entschwefelung bei zwei unterschiedlichen Temperaturen durchgeführt wird.

Das Zeitintervall Zia bis zu einem De-Sulfatierungsvorgang bei niedriger Temperatur tb kann nach dem kumulierten Kraftstoffverbrauch seit dem letzten De-Sulfatierungsvorgang und der Schwefelkapazität des NOx-Speicherkatalysators und/oder der Schwefelfalle bestimmt werden.

Das Zeitintervall Zib zwischen zwei De-Sulfatierungsvorgängen bei hoher Temperatur tc kann nach dem kumulierten Kraftstoffverbrauch seit dem letzten De-Sulfatierungsvorgang bei hoher Temperatur tc und/oder kann nach der Schwefelresistenz des NOx-Speicherkatalysators ( d.h., die tolerierbare Schwefelmasse auf dem NOx-Seicherkatalysator und auf der Schwefelfalle) und/oder kann nach der Schwefelvergiftungsgeschwindigkeit (d.h., der prozentualen Aufnahme des durchströmenden Schwefels) und/oder kann nach dem mit einer dem NOx-Speicherkatalysator nachgeschaltetem Breitband- oder Sprungantwort-Lambdasonde oder mit einem NOx-Sensor gemessenen Schwefelschlupf des NOx-Speicherkatalysators und der Schwefelfalle bestimmt werden.

Je nach Auslegung dieser Parameter kann n zwischen 1, insbesondere 2 oder 3, und etwa 100 liegen. In der Praxis ist mit n-Werten insbesondere zwischen etwa 10 und 50 und vorzugsweise mit n-Werten zwischen 20 und 30 als vorteilhafte n-Werte zu rechnen.

Einer erfindungsgemäßen NOx-Speicherkatalysatoranordnung sind Einrichtungen zur Ermittlung der vorbeschriebenen Parameter zugeordnet, deren Signale einer elektronischen Steuer- oder Regelvorrichtung zugeführt werden, die die vorbeschriebenen Vorgänge automatisch steuert bzw. regelt.

### BEZUGSZEICHENLISTE

- ta: normale Betriebstemperatur
- tb: untere De-Sulfatierungstemperatur
- tc: obere De-Sulfatierungstemperatur
- tB: Sulfatierungs-Temperaturbereich
- tB1: untere Grenze des De-Sulfatierungs-Temperaturbereichs
- tV: Temperaturverlauf
- Zia: Zeitintervall bei niedriger De-Sulfatierungstemperatur
- Zib: Zeitintervall bei höherer De-Sulfatierungstemperatur

## Patentansprüche

1. Verfahren zum Verringern schädlicher Abgasbestandteile in einem Abgasreinigungssystem einer Brennkraftmaschine, wobei das Abgasreinigungssystem eine Speicheranordnung aufweist, die eine Schwefelfalle und einen NOx-Speicherkatalysator umfaßt und die jeweils nach einem bestimmten Zeitintervall abwechselnd bei einer niedrigen und einer höheren Temperatur einer De-Sulfatierung unterzogen wird, wobei
n De-Sulfatierungen, n größer oder gleich 1, der Speicheranordnung bei der niedrigen De-Sulfatierungstemperatur (tb) durchgeführt werden und anschließend eine De-Sulfatierung der Speicheranordnung bei der höheren De-Sulfatierungstemperatur (tc) durchgeführt wird, wobei die niedrigere De-Sulfatierungstemperatur (tb) der De-Sulfatierungstemperatur der Schwefelfalle entspricht und die höhere De-Sulfatierungstemperatur (tc) derjenigen des NOx-Speicherkatalysators entspricht, die neidrigere De-Sulfatierungstemperatur (tb) niedriger als die höhere De-Sulfatierungstemperatur (tc) ist und beide De-Sulfatierungstemperaturen innerhalb des De-Sulfatierungs-Temperaturbereichs der Speicheranordnung liegen, wobei der De-Sulfatierungs-Temperaturbereich oberhalb der normalen Betriebstemperatur der Speicheranordnung liegt.

2. Verfahren nach Anspruch 1, **dadurch gekennzeichnet, daß** die niedrigere De-Sulfatierungstemperatur (tb) etwa 550°C oder weniger beträgt.

3. Verfahren nach einem der vorangegangenen Ansprüche, **dadurch gekennzeichnet, daß** die höhere De-Sulfatierungstemperatur (tc) etwa 650°C bei einem bariumhaltigen NOx-Speicherkatalysator beträgt.

4. Verfahren nach einem der Ansprüche 1 bis 2, **dadurch gekennzeichnet, daß** die höhere De-Sulfatierungstemperatur (tc) etwa 800°C bei einem kaliumhaltigen NOx-Speicherkatalysator beträgt.

5. Verfahren nach einem der vorherigen Ansprüche, **dadurch gekennzeichnet, daß** n zwischen 2 bis 100, insbesondere zwischen 10 bis 50, vorzugsweise zwischen 20 bis 30 liegt.

6. Verfahren nach einem der vorherigen Ansprüche, **dadurch gekennzeichnet, daß** die De-Sulfatierung bei der niedrigeren De-Sulfatierungstemperatur (tb) und/oder der höheren De-Sulfatierungstemperatur (tc) bei einer reduzierenden oder stöchiometrischen oder leicht mageren Zusammensetzung des Abgases erfolgt.

7. Verfahren nach einem der vorherigen Ansprüche, **dadurch gekennzeichnet, daß** das Zeitintervall (Zia) bis zu einer De-Sulfatierung bei der niedrigeren De-Sulfatierungstemperatur (tb) nach dem kumulierten Kraftstoffverbrauch seit der letzten De-Sulfatierung und/oder der Schwefelkapazität des NOx-Speicherkatalysators und/oder der Schwefelfalle bestimmt wird.

8. Verfahren nach einem der vorherigen Ansprüche, **dadurch gekennzeichnet, daß** das Zeitintervall (Zib) zwischen zwei De-Sulfatierungen bei der höheren De-Sulfatierungstemperatur (tc) nach dem kumulierten Kraftstoffverbrauch seit der letzten De-Sulfatierung bei der höheren De-Sulfatierungstemperatur (tc) und/oder nach der Schwefelresistenz des NOx-Speicherkatalysators und/der der oder den Schwefelfallen und/oder nach der Schwefelvergiftungsgeschwindigkeit des NOx-Speicherkatalysators und/oder der oder den Schwefelfallen und/oder nach dem Schwefelschlupf des NOx-Speicherkatalysators und/oder der Schwefelfalle bestimmt wird.

9. Verfahren nach einem der vorangegangenen Ansprüche, **dadurch gekennzeichnet, daß** die Schwefelfalle magnesiumhaltig ist, der NOx-Speicherkatalysator barium- oder kaliumhaltig ist und die Schwefelfalle dem NOx-Speicherkatalysator vorgelagert ist.

10. Verfahren nach Anspruch 9, **dadurch gekennzeichnet, daß** die Schwefelfalle und der NOx-Speicherkatalysator separate Einheiten sind.

11. Verfahren nach Anspruch 9, **dadurch gekennzeichnet, daß** die Schwefelfalle und der NOx-Speicherkatalysator auf einem gemeinsamen Träger angeordnet sind.

12. Verfahren nach Anspruch 11, **dadurch gekennzeichnet, daß** die Schwefelfalle und der NOx-Speicherkatalysator hintereinander auf dem gemeinsamen Träger angeordnet sind.

13. Verfahren nach Anspruch 11, **dadurch gekennzeichnet, daß** die Speicheranordnung eine NOx-Speicherkomponentenschicht und eine diese überlagernde SOx-Speicherkomponentenschicht aufweist, die auf dem Träger angeordnet sind.

14. Verfahren nach Anspruch 11, **dadurch gekennzeichnet, daß** die Anordnung eine NOx-Speicherkomponente mit beigemischter SOx-Speicherkomponente aufweist, die auf dem Träger angeordnet sind.

## Claims

1. Method for reducing harmful exhaust gas components in an exhaust emission control system of an internal combustion engine, the exhaust emission control system having a storage arrangement which comprises a sulphur trap and an NOx storage catalytic converter and which is alternately subjected to a low temperature and a relatively high temperature of a desulphurizing operation, in each case after a specific time interval, n desulphurizing operations, where n is greater than or equal to 1, of the storage arrangement being carried out at the low desulphurization temperature (tb) and desulphurization of the storage arrangement being subsequently carried out at the relatively high desulphurization temperature (tc), the lower desulphurization temperature (tb) corresponding to the desulphurization temperature of the sulphur trap, and the higher desulphurization temperature (tc) corresponding to that of the NOx storage catalytic converter, the lower desulphurization temperature (tb) being lower than the higher desulphurization temperature (tc), and both desulphurization temperatures lying within the desulphurization temperature range of the storage arrangement, the desulphurization temperature range lying above the normal operating temperature of the storage arrangement.

2. Method according to Claim 1, **characterized in that** the lower desulphurization temperature (tb) is approximately 550°C or less.

3. Method according to one of the preceding claims, **characterized in that** the higher desulphurization temperature (tc) is approximately 650°C for a barium-containing NOx storage catalytic converter.

4. Method according to either of Claims 1 and 2, **characterized in that** the higher desulphurization temperature (tc) is approximately 800°C for a potassium-containing NOx storage catalytic converter.

5. Method according to one of the preceding claims, **characterized in that** n lies between 2 to 100, in particular between 10 to 50, preferably between 20 to 30.

6. Method according to one of the preceding claims, **characterized in that** the desulphurization takes place at the lower desulphurization temperature (tb) and/or the higher desulphurization temperature (tc) when there is a reducing or stoichiometric or slightly thin composition of the exhaust gas.

7. Method according to one of the preceding claims, **characterized in that** the time interval (Zia) up to desulphurization at the lower desulphurization temperature (tb) is determined in accordance with the accumulated fuel consumption since the last desulphurization and/or the sulphur capacity of the NOx storage catalytic converter and/or of the sulphur trap.

8. Method according to one of the preceding claims, **characterized in that** the time interval (Zib) between two desulphurizing operations at the higher desulphurization temperature (tc) is determined in accordance with the accumulated fuel consumption since the last desulphurization at the higher desulphurization temperature (tc) and/or in accordance with the sulphur resistance of the NOx storage catalytic converter and/or of the sulphur trap or traps and/or in accordance with the sulphur poisoning rate of the NOx storage catalytic converter and/or of the sulphur trap or traps and/or in accordance with the sulphur slip of the NOx storage catalytic converter and/or of the sulphur trap.

9. Method according to one of the preceding claims, **characterized in that** the sulphur trap contains magnesium, the NOx storage catalytic converter contains barium or potassium and the sulphur trap is mounted upstream of the NOx storage catalytic converter.

10. Method according to Claim 9, **characterized in that** the sulphur trap and the NOx storage catalytic converter are separate units.

11. Method according to Claim 9, **characterized in that** the sulphur trap and the NOx storage catalytic converter are arranged on a common carrier.

12. Method according to Claim 11, **characterized in that** the sulphur trap and the NOx storage catalytic converter are arranged one behind the other on the common carrier.

13. Method according to Claim 11, **characterized in that** the storage arrangement has an NOx storage component layer and an SOx storage component layer which is superimposed on the latter, said layers being arranged on the carrier.

14. Method according to Claim 11, **characterized in that** the arrangement has an NOx storage component with added SOx storage component, said component being arranged on the carrier.

## Revendications

1. Procédé pour réduire la proportion de constituants nocifs de gaz d'échappement dans un système de purification de gaz d'échappement d'un moteur à combustion interne, le système de purification de gaz d'échappement présentant un ensemble accumulateur qui comprend un piège à soufre et un catalyseur-accumulateur de NOx et qui, chaque fois après un intervalle de temps déterminé, est soumis alternativement à une désulfatation à température inférieure et à température supérieure,
n désulfatations, n étant supérieur ou égal à 1, de l'ensemble accumulateur étant effectuées à la température inférieure (tb) de désulfatation, à la suite de quoi est effectuée une désulfatation de l'ensemble accumulateur à la température supérieure (tc) de désulfatation, la température inférieure (tb) de désulfatation correspondant à la température de désulfatation du piège à soufre et la température supérieure (tc) de désulfatation correspondant à celle du catalyseur-accumulateur de NOx, la température inférieure (tb) de désulfatation étant inférieure à la température supérieure (tc) de désulfatation, et les deux températures de désulfatation se situant à l'intérieur de la plage de température de désulfatation de l'ensemble accumulateur, la plage de température de désulfatation se situant au-dessus de la température normale de service de l'ensemble accumulateur.

2. Procédé selon la revendication 1, **caractérisé en ce que** la température inférieure (tb) de désulfatation est égale à environ 550°C ou moins.

3. Procédé selon l'une quelconque des revendications précédentes, **caractérisé en ce que** la température supérieure (tc) de désulfatation est égale à environ 650°C pour un catalyseur-accumulateur de NOx contenant du baryum.

4. Procédé selon l'une quelconque des revendications 1 à 2, **caractérisé en ce que** la température supérieure (tc) de désulfatation est égale à environ 800°C pour un catalyseur-accumulateur de NOx contenant du potassium.

5. Procédé selon l'une quelconque des revendications précédentes, **caractérisé en ce que** n est compris entre 2 et 100, notamment entre 10 et 50, de préférence entre 20 et 30.

6. Procédé selon l'une quelconque des revendications précédentes, **caractérisé en ce que** la désulfatation à la température inférieure (tb) de désulfatation et/ou à la température supérieure (tc) de désulfatation s'effectue pour une composition réductrice ou stoechiométrique ou légèrement maigre des gaz d'échappement.

7. Procédé selon l'une quelconque des revendications précédentes, **caractérisé en ce que** l'intervalle de temps (Zia) jusqu'à une désulfatation à la température inférieure (tb) de désulfatation est déterminé d'après la consommation cumulée de carburant depuis la dernière désulfatation et/ou d'après la contenance de soufre du catalyseur-accumulateur de NOx et/ou du piège à soufre.

8. Procédé selon l'une quelconque des revendications précédentes, **caractérisé en ce que** l'intervalle de temps (Zib) entre deux désulfatations à la température supérieure (tc) de désulfatation est déterminé d'après la consommation cumulée de carburant depuis la dernière désulfatation à la température supérieure (tc) de désulfatation, et/ou d'après la résistance au soufre du catalyseur-accumulateur de NOx et/ou du ou des pièges à soufre, et/ou d'après la vitesse d'intoxication au soufre du catalyseur-accumulateur de NOx et/ou du ou des pièges à soufre, et/ou d'après la fuite ionique de soufre du catalyseur-accumulateur de NOx et/ou du piège à soufre.

9. Procédé selon l'une quelconque des revendications précédentes, **caractérisé en ce que** le piège à soufre contient du magnésium, le catalyseur-accumulateur de NOx contient du baryum ou du potassium, et le piège à soufre est monté avant le catalyseur-accumulateur de NOx.

10. Procédé selon la revendication 9, **caractérisé en ce que** le piège à soufre et le catalyseur-accumulateur de NOx sont des unités séparées.

11. Procédé selon la revendication 9, **caractérisé en ce que** le piège à soufre et le catalyseur-accumulateur de NOx sont disposés sur un support commun.

12. Procédé selon la revendication 11, **caractérisé en ce que** le piège à soufre et le catalyseur-accumulateur de NOx sont disposés l'un à la suite de l'autre sur le support commun.

13. Procédé selon la revendication 11, **caractérisé en ce que** l'ensemble accumulateur comprend une couche de composant accumulateur de NOx et une couche, superposée à la précédente, de composant accumulateur de SOx, qui sont disposées sur le support.

14. Procédé selon la revendication 11, **caractérisé en ce que** l'ensemble présente un composant accumulateur de NOx auquel est mélangé un composant accumulateur de SOx, les composants étant disposés sur le support.
